Europäisches Patentamt

European Patent Office

Office européen des brevets

(19)

(11) **EP 0 926 529 B1**

(12) **FASCICULE DE BREVET EUROPEEN**

(45) Date de publication et mention
de la délivrance du brevet:
**09.03.2005 Bulletin 2005/10**

(51) Int Cl.7: **G02B 27/62**, G02B 7/00

(21) Numéro de dépôt: **98402829.0**

(22) Date de dépôt: **16.11.1998**

(54) **Procédé et dispositif pour corriger automatiquement des erreurs de positionnement d'éléments optiques d'une chaîne optique**

Verfahren und Vorrichtung zur automatischen Positionskorrektur von optischen Elementen in einem optischen Aufbau

Procedure and apparatus for automatic positioning correction of optical elements in an optical assembly

(84) Etats contractants désignés:
**BE DE GB NL**

(30) Priorité: **17.12.1997 FR 9715998**

(43) Date de publication de la demande:
**30.06.1999 Bulletin 1999/26**

(73) Titulaire: **COMPAGNIE INDUSTRIELLE DES LASERS CILAS**
**F-91460 Marcoussis (FR)**

(72) Inventeur: **Gaffard, Jean-Paul**
**77300 Fontainebleau (FR)**

(74) Mandataire: **Bonnetat, Christian**
**CABINET BONNETAT**
**29, rue de St. Pétersbourg**
**75008 Paris (FR)**

(56) Documents cités:
**US-A- 4 627 725**     **US-A- 5 282 016**
**US-A- 5 536 916**

• **PATENT ABSTRACTS OF JAPAN vol. 010, no. 003 (P-418), 8 janvier 1986 -& JP 60 159714 A (NIPPON DENKI KK), 21 août 1985**
• **PATENT ABSTRACTS OF JAPAN vol. 009, no. 323 (P-414), 18 décembre 1985 -& JP 60 150016 A (RICOH KK), 7 août 1985**

**Description**

La présente invention concerne un procédé et un dispositif pour corriger automatiquement des erreurs de positionnement d'éléments optiques d'une chaîne optique.

Dans le cadre de la présente invention, une chaîne optique est constituée d'une pluralité d'éléments optiques, par exemple des lentilles, des miroirs, des diaphragmes ou des récepteurs optiques, centrés par rapport à l'axe optique de ladite chaîne et destinés à être soumis à un faisceau lumineux.

Bien que non exclusivement, la présente invention s'applique particulièrement bien à une chaîne du type laser.

Pour qu'une telle chaîne optique, notamment une chaîne laser, puisse fonctionner normalement et efficacement, il est nécessaire que lesdits éléments optiques soient bien positionnés par rapport à l'axe optique de ladite chaîne.

Par conséquent, il est nécessaire de corriger toute erreur de positionnement existant au début des opérations ou apparaissant au cours desdites opérations.

De façon connue, pour réaliser une telle correction, on effectue une pluralité de processus séquentiels, dont chacun consiste à mesurer la position d'une image et à agir sur l'un des éléments optiques pour recentrer cette image. Ce même processus est réalisé pour une pluralité d'images, image après image, en choisissant à chaque fois un élément optique approprié.

On constate généralement que l'action sur un élément optique quelconque de la chaîne entraîne des effets sur plusieurs images situées en aval de cet élément optique. Ceci est dû notamment au fait qu'un faisceau lumineux se définit par rapport à deux plans, à savoir un plan focal et un plan pupillaire. Ces deux plans sont imagés par les différents éléments optiques tout au long de la chaîne. Aussi, l'action sur un élément optique déplace simultanément ces deux plans images.

Par conséquent, il est nécessaire, pour parvenir à un réglage complet et satisfaisant de la chaîne optique, de refaire plusieurs fois les mêmes séquences de contrôle et de correction de position. Cette méthode de correction connue est donc itérative et sa durée croît rapidement en fonction de la précision souhaitée.

La présente invention a pour objet de remédier à ces inconvénients. Elle concerne un procédé pour corriger automatiquement, en une seule mise en oeuvre, les erreurs de positionnement d'éléments optiques d'une chaîne optique, par rapport à l'axe optique de ladite chaîne, ledit procédé ne nécessitant pas d'actions itératives et la précision souhaitée étant obtenue dès la première mise en oeuvre.

A cet effet, selon l'invention, ledit procédé comprend toutes les étapes récitées dans la revendication 1.

Des modes de réalisations additionels sont définis dans les revendications indépendantes.

Ainsi, grâce à l'invention, dès la première mise en oeuvre dudit procédé, le positionnement desdits n éléments optiques est réalisé (n n'étant pas forcément le nombre total d'éléments optiques de la chaîne optique, comme on le verra ci-dessous) de sorte que la correction est effectuée. Par conséquent, aucune action itérative n'est nécessaire.

De plus, comme il est possible pendant les mesures d'utiliser un faisceau lumineux de travail de la chaîne optique, on est en mesure de réaliser la correction simultanément à la mise en oeuvre du travail (mesures, calculs, corrections, ...) réalisé par la chaîne optique. Dans ce cas, la correction n'entraîne aucune perte de temps.

Bien entendu, dans le cadre de la présente invention, on peut également former lesdites images à l'aide d'un faisceau lumineux auxiliaire, spécifiquement destiné à la mise en oeuvre du procédé conforme à l'invention.

Par ailleurs, dans un mode de réalisation préféré, on détermine la matrice de passage |A| par calcul, en simulant le cheminement d'un faisceau lumineux dans ladite chaîne optique, à l'aide de l'optique géométrique. En variante, cette matrice peut également être déterminée de façon expérimentale sur la chaîne elle-même.

De plus, de préférence, la matrice $|A|^{-1}$ est calculée, à partir de la matrice de passage |A|, à l'aide d'une méthode d'inversion par décomposition en valeurs singulières. Cette méthode présente en outre l'avantage de déterminer le nombre minimal d'éléments optiques nécessaires pour effectuer les corrections. Ce nombre est généralement inférieur au nombre total d'éléments optiques de la chaîne, ce qui permet de réduire et minimiser le nombre de corrections à effectuer.

Selon l'invention, un plan de mesure peut être :

- un plan pupillaire d'un élément optique ; ou
- un plan focal d'un élément optique ; ou
- un plan quelconque situé dans la chaîne.

Par ailleurs, de façon avantageuse, on détermine une relation entre les erreurs de mesure et les erreurs de correction, à partir de l'expression:

$$|\varepsilon^2| = |A|^{-1} \cdot |\sigma^2| \cdot (|A|^{-1})^t$$

dans laquelle :

- $|\varepsilon^2|$ est une matrice constituée par la variance des erreurs de positionnement d'au moins un élément optique ;
- $|\sigma^2|$ est une matrice constituée par la variance des erreurs de mesure correspondantes ; et
- $(|A|^{-1})^t$ est la transposée de la matrice $|A|^{-1}$.

Cette relation permet d'adapter au mieux les caractéristiques et les propriétés des moyens de mesure et des moyens de correction (ou de positionnement).

La présente invention concerne également un dispositif pour corriger automatiquement des erreurs de positionnement du type précité.

Selon l'invention, ledit dispositif comporte les caractéristiques récitées dans la revendication 8.

D1 = PAJ vol . 010, no. 003 (P-418), 8 janvier 1986 divulgue un dispositif d'alignement d'un axe optique ou une mesure est réalisée dans un plan de mesure donné.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre une première application d'un dispositif conforme à l'invention sur une chaîne laser.

La figure 3 montre un mode de réalisation particulier de moyens de mesure.

La figure 4 montre une seconde application d'un dispositif conforme à l'invention sur une chaîne laser amplifiée.

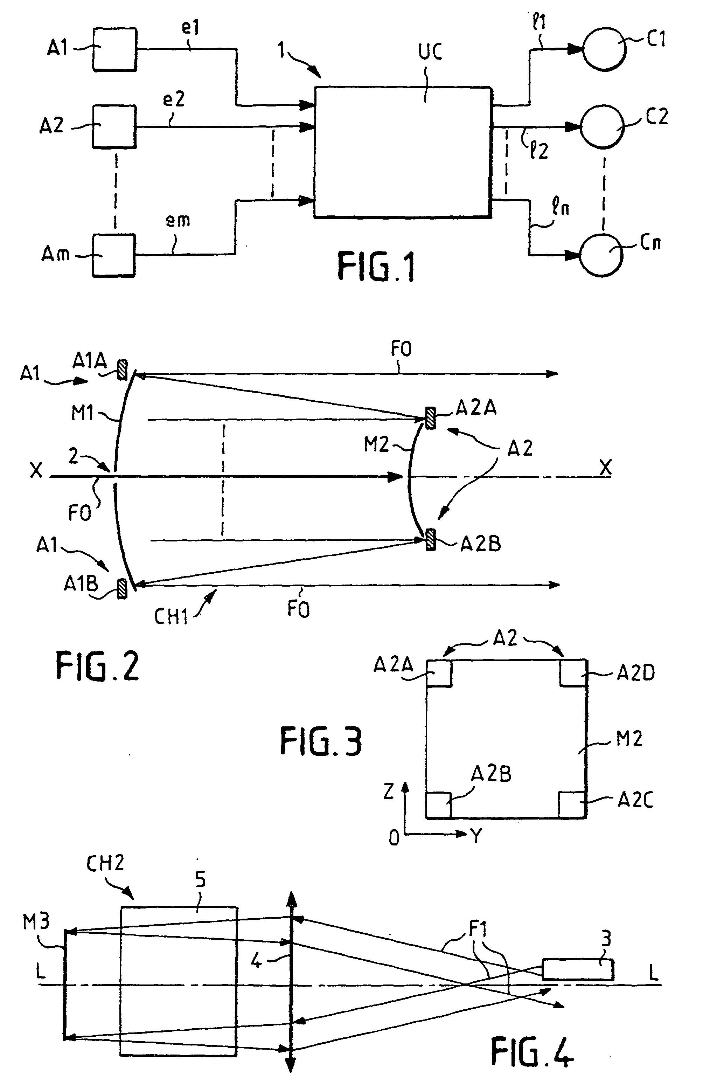

Le dispositif 1 conforme à l'invention et représenté schématiquement sur la figure 1 est destiné à corriger automatiquement des erreurs de positionnement d'éléments optiques, par exemple des lentilles, des miroirs, des diaphragmes ou des récepteurs optiques, précisés ci-dessous d'une chaîne optique CH1 ou CH2, par rapport à l'axe optique de la chaîne CH1 ou CH2, lesdites chaînes CH1 et CH2 étant représentés dans deux modes de réalisation différents respectivement sur les figures 2 et 4.

Pour ce faire, ledit dispositif 1 comporte, selon un mode de réalisation principal :

- des moyens A1 à Am, de type connu, qui comprennent par exemple des récepteurs d'image et des moyens de traitement automatique d'image associés et non représentés, et qui sont destinés à réaliser des mesures de décalage d'image, par exemple par un calcul de barycentres ;
- une unité de calcul UC reliée, par l'intermédiaire de liaisons e1 à em, respectivement auxdits moyens A1 et Am et déterminant à partir des mesures réalisées par ces derniers des ordres de correction de positionnement ; et
- des moyens C1 à Cn reliés respectivement par l'intermédiaire de liaisons l1 à ln à l'unité de calcul UC et modifiant le positionnement d'éléments optiques associés précisés ci-dessous, en fonction d'ordres de correction de positionnement reçus de ladite unité de calcul UC. Le nombre $m$ est supérieur ou égal au nombre $n$.

Selon l'invention, chacun desdits moyens A1 à Am réalise deux mesures de décalage d'image, par rapport à l'axe optique X-X ou L-L de la chaîne CH1 ou CH2, dans un plan de mesure orthogonal audit axe optique X-X ou L-L, et à savoir :

- une première mesure selon une direction OY dudit plan de mesure ; et
- une seconde mesure selon une direction OZ dudit plan de mesure, orthogonale à ladite direction OY, tel que représenté sur la figure 3.

Ledit plan de mesure est, selon l'invention, le plan focal ou le plan pupillaire d'un élément optique ou un plan quelconque comme le plan d'un élément optique M2, tel que représenté sur la figure 3.

En outre, pour réaliser ses calculs, l'unité de calcul UC utilise une relation matricielle

$$|M| = |A| \cdot |C|$$

dans laquelle :

- $|M|$ est un vecteur colonne comprenant lesdites 2m mesures réalisées par les moyens A1 à Am ;
- $|C|$ est un vecteur colonne comprenant 2n valeurs qui sont respectivement représentatives des erreurs de positionnement, à la fois suivant la direction OY et suivant la direction OZ, de $n$ éléments optiques auxquels sont associés respectivement les $n$ moyens C1 à Cm ; et
- $|A|$ est une matrice de passage.

Selon le mode de réalisation principal, on détermine cette matrice de passage $|A|$, c'est-à-dire ses composants, par calcul, en simulant le cheminement d'un faisceau lumineux dans ladite chaîne optique CH1 ou CH2 à l'aide de l'optique géométrique.

En variante, on peut également déterminer de façon empirique les composants de la matrice $|A|$:

- en réalisant des déplacements déterminés des éléments optiques ;
- en mesurant les deux décalages d'image induits par ces déplacements ; et
- en déterminant une relation entre les déplacements et les mesures.

A partir de cette matrice $|A|$, l'unité de calcul UC détermine la matrice inverse $|A|^{-1}$. Puis, elle calcule les 2n valeurs du vecteur colonne $|C|$ à partir de l'expression matricielle :

$$|C| = |A|^{-1} \cdot |M|.$$

Ces 2n valeurs représentatives d'erreurs de positionnement des n éléments optiques sont transmises aux moyens C1 à Cn qui modifient automatiquement le positionnement de ces derniers de manière à corriger lesdites erreurs de positionnement. Les moyens C1 à Cn sont du type connu et comprennent, par exemple, des organes électromécaniques de positionnement agissant sur les éléments optiques associés.

Ainsi, grâce à l'invention, le dispositif 1 permet de corriger automatiquement et de façon précise, en une seule mise en oeuvre, toutes les erreurs de positionnement de la chaîne optique CH1 ou CH2.

Par conséquent, aucune action itérative n'est nécessaire, ce qui permet de réduire considérablement le temps de correction. D'autres avantages de l'invention sont précisés ci-dessous.

Dans le mode de réalisation principal la matrice $|A|^{-1}$ est calculée, à l'aide d'une méthode d'inversion connue sous le nom de "décomposition en valeurs singulières", à partir de la matrice de passage $|A|$. A l'aide de cette méthode, on analyse les modes propres de la matrice de passage et on élimine ses dégénérescences, ce qui permet de réduire sensiblement le nombre des mesures et des corrections à réaliser, notamment dans le cas d'une chaîne à passages multiples de faisceaux lumineux.

Par conséquent, le nombre n d'éléments optiques, dont on corrige la position, donc également le nombre des moyens C1 à Cn à utiliser à cet effet, est inférieur au nombre total d'éléments optiques de la chaîne CH1 ou CH2, ce qui permet de réduire le coût du dispositif 1.

Par ailleurs, selon le mode de réalisation principal on détermine une relation entre les erreurs de mesure et les erreurs de correction à partir de l'expression .

$$|\varepsilon^2| = |A|^{-1} \cdot |\sigma^2| \cdot (|A|^{-1})^t \qquad (1)$$

dans laquelle :

- $|\varepsilon^2|$ est une matrice comprenant la variance des erreurs de positionnement d'au moins un élément optique ;
- $|\sigma^2|$ est une matrice comprenant la variance des erreurs de mesure correspondantes ; et
- $(|A|^{-1})^t$ est la transposée de la matrice $|A|^{-1}$.

Cette relation (1) est utilisée pour spécifier au mieux les caractéristiques et les propriétés des moyens A1 à Am et des moyens C1 à Cn précités.

Sur la figure 2, on a représenté une première application de l'invention sur une chaîne optique CH1 correspondant à une cavité laser de type connu et comportant, comme éléments optiques, deux miroirs M1 et M2.

De façon connue, un milieu amplificateur de laser, par exemple un gaz, est emprisonné entre les miroirs M1 et M2. Les plans focaux desdits miroirs M1 et M2 sont confondus pour former un système optique afocal.

Pour la mise en oeuvre de l'invention, on utilise un faisceau laser F0 spécialement prévu à cet effet, que l'on introduit dans la cavité laser, par exemple par un trou 2 de petites dimensions pratiqué dans le miroir M1 au niveau de l'axe optique X-X.

Ce faisceau laser F0 subit des réflexions successives sur les miroirs M1 et M2 de sorte que son diamètre augmente progressivement, jusqu'à pouvoir sortir de la cavité, tel que représenté.

On prévoit des moyens de mesure A1 et A2 respectivement sur les miroirs M1 et M2. Chacun desdits moyens de mesure A1 et A2 comporte quatre photodiodes agencées de façon symétrique, par rapport à l'axe optique X-X, aux bords desdits miroirs M1 et M2, comme représenté pour les photodiodes A1A, A1B du moyen A1 et les photodiodes A2A, A2B, A2C et A2D du moyen A2 sur les figures 2 et 3.

Ces moyens A1 et A2 fonctionnent selon le principe connu dit des "quatre quadrants".

A titre d'exemple, en supposant que S1, S2, S3 et S4 représentent les amplitudes des signaux captés respectivement par les photodiodes A2A, A2B, A2C, A2D, on en déduit les décalages d'image My et Mz, respectivement selon les directions OY et OZ orthogonales entre elles et orthogonales à l'axe X-X, à partir des relation

$$My = \frac{(S1+S2) - (S3+S4)}{S1+S2+S3+S4}$$

$$Mz = \frac{(S1+S4) - (S2+S3)}{S1+S2+S3+S4}$$

Les valeurs My et Mz ainsi déterminées sont utilisées pour la mise en oeuvre de l'invention, c'est-à-dire pour corriger les éventuelles erreurs de positionnement des miroirs M1 et M2, de la manière précitée.

Sur la figure 4, on a représenté une seconde application de l'invention sur une chaîne optique CH2 correspondant à une chaîne laser amplifiée de type connu et comportant un laser pilote 3 de faible puissance et, comme éléments optiques, un objectif 4 et un miroir de cavité M3.

De façon connue, ladite chaîne laser CH2 comporte également un milieu amplificateur 5 comportant, par exemple, des barreaux de verre au néodyme pompés par flash et destiné à augmenter la puissance du faisceau laser F1 engendré par le laser pilote 3.

Comme dans le mode de réalisation de la figure 2, on agence des photodiodes non représentées aux bords du miroir M3 et de l'objectif 4. La correction du positionnement de ces éléments optiques M3 et 4 est réalisée de la même manière que celle décrite précédemment pour le mode de réalisation de la figure 2.

## Revendications

**1.** Procédé pour corriger automatiquement des erreurs de positionnement d'éléments optiques (M1, M2, M3, 4) d'une chaîne optique (CH1, CH2), par rapport à l'axe optique (X-X, L-L) de ladite chaîne (CH1, CH2), procédé selon lequel :

- on réalise $m$ paires de mesures dans des plans de mesure différents de ladite chaîne (CH1, CH2) à l'aide de $m$ moyens (A1, A2, Am), $m$ étant un entier supérieur ou égal à 2, chacune desdites $m$ paires mesures étant représentative d'un décalage d'image par rapport audit axe optique (X-X, L-L) dans le plan de mesure correspondant ;
- on définit une relation matricielte :

$$|M| = |A| . |C|$$

dans laquelle :

- $|M|$ est un vecteur colonne comprenant lesdites $m$ paires de mesures ;
- $|C|$ est un vecteur colonne comprenant 2n valeurs qui sont respectivement représentatives des erreurs de positionnement de $n$ éléments optiques (M1, M2, M3, 4), $n$ étant un entier inférieur ou égal à $m$ ; et
- $|A|$ est une matrice de passage ;

- on détermine la matrice de passage $|A|$ ;
- on calcule les 2n valeurs du vecteur colonne $|C|$, à partir de l'expression matricielle :

$$|C| = |A|^{-1} . |M|,$$

$|A|^{-1}$ étant la matrice inverse de $|A|$, ladite matrice $|A|^{-1}$ étant calculée à partir de la matrice de passage $|A|$ à l'aide d'une méthode d'inversion par décomposition en valeurs singulières ;
- on détermine une relation entre les erreurs de mesure et les erreurs de correction, à partir de l'expression :

$$|\varepsilon^2| = |A|^{-1} . |\sigma^2| . (|A|^{-1})^t$$

dans laquelle :

- $|\varepsilon^2|$ est une matrice comprenant la variance des erreurs de positionnement d'au moins un élément optique (M1, M2, M3, 4);
- $|\sigma^2|$ est une matrice comprenant la variance des erreurs de mesure correspondantes ; et

- $(|A|^{-1})^t$ est la transposée de la matrice $|A|^{-1}$; et

- on modifie le positionnement desdits $n$ éléments optiques (M1, M2, M3, 4), respectivement de façon correspondant aux 2n valeurs calculées précédemment, de manière à corriger les erreurs de positionnement.

**2.** Procédé selon la revendication 1, **caractérisé en ce qu'**au moins certains desdits plans de mesure sont les plans focaux d'éléments optiques.

**3.** Procédé selon l'une des revendications 1 ou 2, **caractérisé en ce qu'**au moins certains desdits plans de mesure sont les plans pupillaires d'éléments optiques.

**4.** Procédé selon l'une quelconque des revendications 1 à 3, **caractérisé en ce que** l'on détermine la matrice de passage $|A|$ par calcul, en simulant le cheminement d'un faisceau lumineux (F0, F1) dans ladite chaîne optique (CH1, CH2), à l'aide de l'optique géométrique.

**5.** Procédé selon l'une quelconque des revendications 1 à 3, **caractérisé en ce que** l'on détermine la matrice de passage $|A|$ de façon expérimentale.

**6.** Procédé selon l'une quelconque des revendications 1 à 5, **caractérisé en ce que**, pour mesurer les décalages d'image, on forme des images à l'aide d'un faisceau lumineux (F1) de la chaîne optique (CH2).

**7.** Procédé selon l'une quelconque des revendications 1 à 5, **caractérisé en ce que**, pour mesurer les décalages d'image, on forme des images à l'aide d'un faisceau lumineux auxiliaire (F0).

**8.** Dispositif pour corriger automatiquement des erreurs de positionnement d'éléments optiques (M1, M2, M3, 4) d'une chaîne optique (CH1, CH2), par rapport à l'axe optique (X-X, L-L) de ladite chaîne (CH1, CH2), ledit dispositif comportant :

- $m$ premiers moyens (A1, A2, Am) pour réaliser 2m mesures dans des plans de mesure de ladite chaîne (CH1, CH2), $m$ étant un entier supérieur ou égal à 2, chacune desdites 2m mesures étant représentative d'un décalage d'image par rapport audit axe optique (X-X, L-L) dans le plan de mesure correspondant, et à savoir suivant une première direction (OY) dudit plan de mesure pour une moitié desdites mesures et suivant une seconde direction (OZ) pour l'autre moitié ;

- une unité de calcul (UC) pour déterminer, à partir desdites 2m mesures, 2n valeurs qui sont respectivement représentatives des erreurs de positionnement, à la fois suivant ladite première et ladite seconde directions (OY, OZ), de $\underline{n}$ éléments optiques (M1, M2, M3, 4), $\underline{n}$ étant un entier inférieur ou égal à $\underline{m}$, ladite unité de calcul (UC) utilisant à cet effet l'expression matricielle |M| =|A| . |C| avec |M| et |C| des vecteurs colonnes comprenant respectivement les 2m mesures et les 2n valeurs et |A| une matrice de passage, ladite unité de calcul (UC) déterminant de plus une relation entre les erreurs de mesure et les erreurs de correction, à partir de l'expression :

$$|\varepsilon^2| = |A|^{-1} \cdot |\sigma^2| \cdot |(A|^{-1})^t$$

dans laquelle :

- . $|A|^{-1}$ est la matrice inverse de |A| ;
- . $|\varepsilon^2|$ est une matrice comprenant la variance des erreurs de positionnement d'au moins un élément optique (M1, M2, M3, 4) ;
- . $|\sigma^2|$ est une matrice comprenant la variance des erreurs de mesure correspondantes ; et
- . $(|A|^{-1})^t$ est le transposée de la matrice $|A|^{-1}$; et

- des seconds moyens (C1, C2, Cn) pour modifier automatiquement le positionnement desdits $\underline{n}$ éléments optiques (M1, M2, M3, 4), respectivement de façon correspondant aux 2n valeurs calculées par l'unité de calcul (UC), de manière à corriger les erreurs de positionnement.

9. Dispositif selon la revendication 8,
**caractérisé en ce qu'**au moins certains desdits premiers moyens (A1, A2, Am) comprennent des récepteurs d'image et des moyens de traitement automatique d'image associés.

10. Dispositif selon l'une des revendications 8 et 9,
**caractérisé en ce qu'**au moins certains desdits seconds moyens (C1, C2, Cn) comprennent des organes électromécaniques de positionnement.

**Patentansprüche**

1. Verfahren zum automatischen Korrigieren von Positionsfehlern von optischen Elementen (M1, M2, M3, 4) einer optischen Kette (CH1, CH2) in Bezug auf die optische Achse (X-X, L-L) der Kette (CH1, CH2), wobei bei diesem Verfahren:

- $\underline{m}$ Paare von Messungen in unterschiedlichen Messebenen der Kette (CH1, CH2) mit Hilfe von $\underline{m}$ Mitteln (A1, A2, Am) ausgeführt werden, wobei $\underline{m}$ eine ganze Zahl größer oder gleich 2 ist und wobei jedes der $\underline{m}$ Paare von Messungen repräsentativ für eine Bildverschiebung in Bezug auf die optische Achse (X-X, L-L) in der entsprechenden Messebene ist;
- eine Matrizenbeziehung definiert wird:

$$|M| = |A| \cdot |C|$$

in der:

- . |M| ein Spaltenvektor ist, der die $\underline{m}$ Paare von Messungen enthält;
- . |C| ein Spaltenvektor ist, der 2n Werte enthält, die jeweils repräsentativ für die Positionsfehler von $\underline{n}$ optischen Elementen (M1, M2, M3, 4) sind, wobei $\underline{n}$ eine ganze Zahl kleiner oder gleich $\underline{m}$ ist; und
- . |A| eine Übergangsmatrix ist;

- die Übergangsmatrix |A| bestimmt wird;
- die 2n Werte des Spaltenvektors |C| ausgehend von folgendem Matrixausdruck berechnet werden:

$$|C| = |A|^{-1} \cdot |M|,$$

wobei $|A|^{-1}$ die Kehrmatrix von |A| ist und wobei die Matrix $|A|^{-1}$ ausgehend von der Übergangsmatrix |A| mit Hilfe einer Umkehrmethode durch Singulärwert-Zerlegung berechnet wird;
- eine Beziehung zwischen den Messfehlern und den Korrekturfehlern ausgehend von folgendem Ausdruck bestimmt wird:

$$|\varepsilon^2| = |A|^{-1} \cdot |\sigma^2| \cdot (|A|^{-1})^t$$

in dem:

- . $|\varepsilon^2|$ eine Matrix ist, die die Varianz der Positionsfehler zumindest eines optischen Elements (M1, M2, M3, 4) enthält;
- . $|\sigma^2|$ eine Matrix ist, die die Varianz der entsprechenden Messfehler enthält; und
- . $(|A|^{-1})^t$ die Transponierte der Matrix $|A|^{-1}$ ist; und

- die Position der $\underline{n}$ optischen Elemente (M1, M2, M3, 4) jeweils auf eine Weise geändert wird, die den 2n vorher berechneten Werten entspricht, um die Positionsfehler zu korrigieren.

2. Verfahren nach Anspruch 1, **dadurch gekennzeichnet, dass** mindestens manche der Messebenen die Brennpunktsebenen von optischen Elementen sind.

3. Verfahren nach einem der Ansprüche 1 oder 2, **dadurch gekennzeichnet, dass** mindestens manche der Messebenen die Pupillenebenen von optischen Elementen sind.

4. Verfahren nach einem der Ansprüche 1 bis 3, **dadurch gekennzeichnet, dass** die Übergangsmatrix |A| durch Berechnung bestimmt wird, indem der Weg eines Lichtbündels (F0, F1) in der optischen Kette (CH1, CH2) mit Hilfe der geometrischen Optik simuliert wird.

5. Verfahren nach einem der Ansprüche 1 bis 3, **dadurch gekennzeichnet, dass** die Übergangsmatrix |A| auf experimentelle Weise bestimmt wird.

6. Verfahren nach einem der Ansprüche 1 bis 5, **dadurch gekennzeichnet, dass** zur Messung der Bildverschiebungen Bilder mit Hilfe eines Lichtbündels (F1) der optischen Kette (CH2) gebildet werden.

7. Verfahren nach einem der Ansprüche 1 bis 5, **dadurch gekennzeichnet, dass** zur Messung der Bildverschiebungen Bilder mit Hilfe eines Hilfslichtbündels (F0) gebildet werden.

8. Vorrichtung zum automatischen Korrigieren von Positionsfehlern von optischen Elementen (M1, M2, M3, 4) einer optischen Kette (CH1, CH2) in Bezug auf die optische Achse (X-X, L-L) der Kette (CH1, CH2), wobei die Vorrichtung umfasst:

   - m erste Mittel (A1, A2, Am) zur Ausführung von 2m Messungen in den Messebenen der Kette (CH1, CH2), wobei m eine ganze Zahl größer oder gleich 2 ist und wobei jede der 2m Messungen repräsentativ für eine Bildverschiebung in Bezug auf die optische Achse (X-X, L-L) in der entsprechenden Messebene ist, und zwar in einer ersten Richtung (OY) der Messebene für eine Hälfte der Messungen und in einer zweiten Richtung (OZ) für die andere Hälfte;
   - eine Rechnereinheit (UC), um ausgehend von den 2m Messungen 2n Werte zu bestimmen, die jeweils repräsentativ für die Positionsfehler von n optischen Elementen (M1, M2, M3, 4) in der ersten und der zweiten Richtung (OY, OZ) sind, wobei n eine ganze Zahl kleiner oder gleich m ist, wobei die Rechnereinheit (UC) zu diesem Zweck den Matrixausdruck |M|=|A| . |C| verwendet, wobei |M| und |C| Spaltenvektoren sind, die die 2m Messungen bzw. die 2n Werte enthalten und |A| eine Übergangsmatrix ist, und wobei die Rechnereinheit (UC) darüber hinaus eine Beziehung zwischen den Messfehlern und den Korrekturfehlern ausgehend von folgendem Ausdruck bestimmt:

$$|\varepsilon^2| = |A|^{-1} \cdot |\sigma^2| \cdot (|A|^{-1})^t,$$

in dem

   - $|A|^{-1}$ die Kehrmatrix von |A| ist;
   - $|\varepsilon^2|$ eine Matrix ist, die die Varianz der Positionsfehler zumindest eines optischen Elements (M1, M2, M3, 4) enthält;
   - $|\sigma^2|$ eine Matrix ist, die die Varianz der entsprechenden Messfehler enthält; und
   - $(|A|^{-1})^t$ die Transponierte der Matrix $|A|^{-1}$ ist; und

   - zweite Mittel (C1, C2, Cn), um die Position der n optischen Elemente (M1, M2, M3, 4) automatisch zu ändern, jeweils auf eine Weise, die den 2n von der Rechnereinheit (UC) berechneten Werten entspricht, um die Positionsfehler zu korrigieren.

9. Vorrichtung nach Anspruch 8, **dadurch gekennzeichnet, dass** mindestens manche der ersten Mittel (A1, A2, Am) Bildempfänger und dazugehörige Mittel zur automatischen Bildverarbeitung umfassen.

10. Vorrichtung nach einem der Ansprüche 8 und 9, **dadurch gekennzeichnet, dass** mindestens manche der zweiten Mittel (C1, C2, Cn) elektromechanische Positionierungsorgane umfassen.

**Claims**

1. Method for automatically correcting the positioning errors of optical elements (M1, M2, M3, 4) of an optical system (CH1, CH2) with respect to the optical axis (X-X, L-L) of said system (CH1, CH2), process according to which:

   - m pairs of measurements are taken in different measurement planes of said system (CH1, CH2) with the aid of m means (A1, A2, Am), m being an integer greater than or equal to 2, each of said m measurement pairs being representative of an image shift with respect to said optical axis (X-X, L-L) in the corresponding measurement plane;

- a matrix relationship:

$$|M| = |A| \cdot |C|$$

is defined, in which:

- $|M|$ is a column vector comprising said $\underline{m}$ pairs of measurements;
- $|C|$ is a column vector comprising 2n values which are respectively representative of the positioning errors of $\underline{n}$ optical elements (M1, M2, M3, 4), $\underline{n}$ being an integer less than or equal to $\underline{m}$; and
- $|A|$ is a transformation matrix;

- the transformation matrix $|A|$ is determined;
- the 2n values of the column vector $|C|$ are calculated on the basis of the matrix expression:

$$|C| = |A|^{-1} \cdot |M|,$$

$|A|^{-1}$ being the inverse matrix of $|A|$, said matrix $|A|^{-1}$ being calculated from the transformation matrix $|A|$ using a method of conversion based on decomposition into singular values;

- a relationship between the measurement errors and the correction errors is determined from the expression:

$$|\varepsilon^2| = |A|^{-1} \cdot |\sigma^2| \cdot (|A|^{-1})^t$$

in which:

- $|\varepsilon^2|$ is a matrix comprising the variance of the positioning errors of at least one optical element (M1, M2, M3, 4);

- $|\sigma^2|$ is a matrix comprising the variance of the corresponding measurement errors; and

- $(|A|^{-1})^t$ is the transpose of the matrix $|A|^{-1}$; and

- the positioning of said $\underline{n}$ optical elements (M1, M2, M3, 4) is modified respectively in accordance with the 2n values, previously calculated, so as to correct the positioning errors.

2. Method according to Claim 1, **characterized in that** at least some of said measurement planes are the focal planes of optical elements.

3. Method according to either of Claims 1 or 2, **char-**

acterized in that at least some of said measurement planes are the pupil planes of optical elements.

4. Method according to any one of Claims 1 to 3, **characterized in that** the transformation matrix $|A|$ is determined through calculation, by simulating the path of a light beam (F0, F1) in said optical system (CH1, CH2) with the aid of geometrical optics.

5. Method according to any one of Claims 1 to 3, **characterized in that** the transformation matrix $|A|$ is determined experimentally.

6. Method according to any one of Claims 1 to 5, **characterized in that**, in order to measure the image shifts, images are formed with the aid of a light beam (F1) of the optical system (CH2).

7. Method according to any one of Claims 1 to 5, **characterized in that**, in order to measure the image shifts, images are formed with the aid of an auxiliary light beam (F0).

8. Device for automatically correcting the positioning errors of optical elements (M1, M2, M3, 4) of an optical system (CH1, CH2) with respect to the optical axis (X-X, L-L) of said system (CH1, CH2), said device having:

- $\underline{m}$ first means (A1, A2, Am) for taking 2m measurements in measurement planes of said system (CH1, CH2), $\underline{m}$ being an integer greater than or equal to 2, each of said 2m measurements being representative of an image shift with respect to said optical axis (X-X, L-L) in the corresponding measurement plane, and namely in a first direction (OY) of said measurement plane for one half of said measurements and in a second direction (OZ) for the other half;

- a calculation unit (UC) for determining, on the basis of said 2m measurements, 2n values which are respectively representative of the positioning errors, both in said first and in said second directions (OY, OZ), of $\underline{n}$ optical elements (M1, M2, M3, 4), $\underline{n}$ being an integer less than or equal to $\underline{m}$, said calculation unit (UC) using for this purpose the matrix expression $|M|=|A| \cdot |C|$ with $|M|$ and $|C|$ being column vectors respectively comprising the 2m measurements and the 2n values and $|A|$ being a transformation matrix, said calculation unit (UC) furthermore determining a relationship between the measurement errors and the correction errors on the basis of the expression:

$$|\varepsilon^2| = |A|^{-1} \cdot |\sigma^2| \cdot (|A|^{-1})^t$$

in which:

- $|A|^{-1}$ is the inverse matrix of $|A|$;
- $|\varepsilon^2|$ is a matrix comprising the variance of the positioning errors of at least one optical element (M1, M2, M3, 4);
- $|\sigma^2|$ is a matrix comprising the variance of the corresponding measurement errors; and
- $(|A|^{-1})^t$ is the transpose of the matrix $|A|^{-1}$; and

- second means (C1, C2, Cn) for automatically modifying the positioning of said n optical elements (M1, M2, M3, 4), respectively in accordance with the 2n values calculated by the calculation unit (UC), so as to correct the positioning errors.

9. Device according to Claim 8, **characterized in that** at least some of said first means (A1, A2, Am) comprise image detectors and associated automatic image-processing means.

10. Device according to either of Claims 8 and 9, **characterized in that** at least some of said second means (C1, C2, Cn) comprise electromechanical positioning components.

A1 ─ e1 ─ 1 ─ UC ─ ℓ1 ─ C1

A2 ─ e2 ─ ℓ2 ─ C2

Am ─ em ─ ℓn ─ Cn

## FIG.1

A1 ─ A1A ─ FO

M1

A2A ─ A2

X ─ 2 ─ M2 ─ X

FO

A1 ─ A2B

A1B

CH1 ─ FO

## FIG.2

A2A ─ A2 ─ A2D

M2

Z

A2B ─ A2C

O ─ Y

## FIG.3

CH2 ─ 5

M3

L ─ 4 ─ F1 ─ 3 ─ L

## FIG.4